# FASCICULE DE BREVET EUROPEEN

(11) **EP 2 129 576 B1**
(45) Date de publication et mention de la délivrance du brevet: **14.12.2011**
(21) Numéro de dépôt: 08787808.8
(22) Date de dépôt: 18.03.2008
(51) Int. Cl.: B64C 7/00, B64C 25/10

(54) **TRAIN D'ATTERRISSAGE D'AVION POURVU D'AU MOINS UN MOYEN DE RÉDUCTION DE BRUIT**
MIT MINDESTENS EINEM GERÄUSCHUNTERDRÜCKUNGSMITTEL AUSGESTATTETES FLUGZEUGFAHRWERK
AIRCRAFT LANDING GEAR PROVIDED WITH AT LEAST ONE NOISE REDUCING MEANS

(30) Priorité: 23.03.2007 FR 0702128
(43) Date de publication de la demande: 09.12.2009
(73) Titulaire: AIRBUS OPERATIONS (SAS), 31060 Toulouse (FR)
(72) Inventeur: PIET, Jean-François, F-31820 Pibrac (FR); Molin, Nicolas, F-31560 Nailloux (FR); SANDU, Constantin, R-023624 Bucarest (RO)
(74) Mandataire: Bloch, Gérard
(86) Numéro de dépôt international: PCT/FR2008/000354
(87) Numéro de publication internationale: WO 2008/135647

(56) Documents cités:
- EP-A- 1 382 526
- WO-A-2004/039671
- WO-A-2004/089742

## Description

La présente invention concerne un train d'atterrissage d'avion qui est muni d'au moins un moyen de réduction de bruit.

Plus précisément, ledit train d'atterrissage qui est susceptible d'être amené, de façon usuelle, dans l'une de deux positions, à savoir une position rentrée et une position déployée, est du type comportant au moins un moyen de réduction de bruit qui est associé à au moins un élément constitutif (tube, bras, moyen d'attache, tuyau, ...) dudit train d'atterrissage.

La présente invention s'applique à tous types de train d'atterrissage, et en particulier aussi bien à un train d'atterrissage avant qu'à un train d'atterrissage principal, qu'il soit sous la voilure et/ou sous le fuselage.

On sait que le bruit aérodynamique est un paramètre critique dans l'aéronautique et que chaque nouvel avion doit satisfaire, notamment pour sa certification, à une réglementation internationale imposée par l'Organisation Internationale de l'Aviation Civile ICAO ("International Civil Aviation Organization" en anglais), qui est très stricte en ce qui concerne le bruit. De plus, l'Organisation Internationale de l'Aviation Civile va probablement abaisser dans les prochaines années les limites de bruit admises. En outre, certains aéroports ont prescrit des restrictions relatives au bruit encore plus sévères que ces règles internationales.

On sait qu'un train d'atterrissage d'un avion est une source importante de bruit durant le décollage et également, surtout, durant les phases d'atterrissage (d'approche, intermédiaire, finale). Il est généralement admis que les trains d'atterrissage d'un avion produisent environ 30% du bruit total généré par un avion durant la procédure d'atterrissage. De plus, des mesures ont montré que les bruits engendrés par les trains d'atterrissage sont émis dans une large bande de fréquences allant de fréquences faibles de l'ordre de 90 Hz à des fréquences supérieures à 4 kHz. Le bruit émis par un train d'atterrissage n'est donc pas un phénomène à basse fréquence, et il est très gênant notamment pour les populations vivant à proximité d'un aéroport.

Ce bruit est créé essentiellement par l'écoulement de l'air à travers les éléments constitutifs du train d'atterrissage lorsque ce dernier est déployé, ce qui engendre des phénomènes de turbulence qui en interagissant avec les structures sont sources de bruit. Ceci est en partie dû au fait que les différents éléments constitutifs (tubes, bras, moyens d'attache, roues, ...) du train d'atterrissage ne sont pas tous des éléments aérodynamiques. Dans le cadre de la présente invention, on considère qu'un élément aérodynamique est un élément qui présente une forme qui perturbe faiblement l'écoulement de l'air et qui est donc faiblement génératrice de turbulences de l'air, sources de bruit. Le courant d'air qui s'écoule autour de ces éléments constitutifs, non aérodynamiques, engendre donc des turbulences et génère du bruit. Le bruit est généralement provoqué au moment où les turbulences se détachent de ces éléments. De plus, un bruit à large bande peut également être engendré, lorsque des turbulences libres interagissent avec les surfaces d'autres éléments placés en aval. Le bruit global produit par un train d'atterrissage a donc principalement comme origine des turbulences, et leur interaction avec les éléments du train aérodynamique ou non.

Une solution pour réduire ce bruit serait d'entourer certains des éléments constitutifs du train d'atterrissage, ou même tout le train d'atterrissage, de carénages rigides présentant une forme aérodynamique et permettant d'éloigner l'écoulement d'air des éléments non aérodynamiques. Toutefois, une telle solution entraîne de nombreux inconvénients, tels que notamment l'augmentation du coût de fabrication, des difficultés pour inspecter le train d'atterrissage ou certains de ses éléments constitutifs, et une augmentation du poids.

Par le document WO-2004/039671, on connaît des moyens de réduction de bruit qui sont agencés sur un train d'atterrissage. Ces moyens de réduction de bruit comportent, notamment, un carénage déflecteur qui a pour but de modifier la direction de l'écoulement de l'air de manière à l'éloigner d'éléments constitutifs du train d'atterrissage, bruyants, auxquels est associé ce carénage. L'éloignement de l'air d'une zone de génération de bruit permet de réduire le bruit global. Ce carénage peut être muni d'une zone perforée qui a pour but de limiter la quantité d'air détournée et ses éventuels effets négatifs. De plus, l'air (non détourné) qui traverse cette zone perforée est freiné de sorte que le bruit qui en résulte est également réduit. Ce document antérieur prévoit que moins de la moitié de la surface de cette zone perforée est effectivement perforée.

La présente invention a pour objet de remédier aux inconvénients précités. Elle concerne un train d'atterrissage d'avion qui comporte au moins un moyen de réduction de bruit particulièrement avantageux (fiable, peu coûteux, peu encombrant, léger, facile à monter, ...).

A cet effet, selon l'invention, ledit train d'atterrissage d'avion qui est susceptible d'être amené dans l'une de deux positions, à savoir une position rentrée et une position déployée, et qui comporte au moins un moyen de réduction de bruit qui est associé à au moins un élément constitutif dudit train d'atterrissage, est remarquable en ce que ledit moyen de réduction du bruit comprend au moins un filet individuel qui comprend des mailles géométriques et qui est agencé au niveau dudit élément constitutif de sorte qu'au moins l'une de ses parties est sensiblement orthogonale à l'écoulement de l'air dans une position d'extrémité (en aval ou en amont) dudit élément constitutif, lorsque le train d'atterrissage se trouve dans sa position déployée, de manière à engendrer une réduction du bruit (engendré par les effets de l'écoulement de l'air au niveau dudit élément constitutif).

De préférence, ledit filet est agencé=au niveau dudit élément constitutif de sorte qu'au moins l'une de ses parties est sensiblement orthogonale à l'écoulement de -l'air en aval dudit élément constitutif, lorsque le train d'atterrissage se trouve dans sa position déployée, de manière à au moins réduire des turbulences génératrices de bruit qui sont créées en aval dudit élément constitutif par une perturbation de l'écoulement de l'air engendré par cet élément constitutif.

Ainsi, grâce à l'invention, ledit moyen de réduction de bruit qui comprend un filet individuel, précisé ci-dessous, présente de nombreux avantages. En particulier :
- il permet de réduire efficacement le bruit, comme précisé ci-dessous ;
- il est léger ;
- il est peu encombrant ;
- il est facile à monter ; et
- il n'affecte pas le fonctionnement des différents éléments constitutifs du train d'atterrissage.

Dans un premier mode de réalisation, ledit filet présente une forme en plaque, qui peut notamment être plane, courbe ou en forme de V, et il est agencé dans une position d'extrémité (de préférence en aval) relative à un seul élément constitutif.

Ce premier mode de réalisation est particulièrement bien approprié à la réduction du bruit engendré par des éléments constitutifs individuels.

De préférence, ledit filet, qui peut être rigide ou élastique, présente une largeur qui est comprise entre 1,5 et 3 fois la dimension transversale de l'élément constitutif, et une longueur sensiblement égale à la longueur de cet élément constitutif.

Dans ce premier mode de réalisation, lorsque le filet est agencé en aval de l'élément constitutif, les turbulences génératrices de bruit, qui se détachent de l'élément constitutif, perdent l'essentiel de leur énergie lorsqu'ils traversent les mailles dudit filet agencé en-aval. Ainsi, ces turbulences sont pratiquement annulées, et n'engendrent donc presque pas de bruit. Ce filet permet également de défléchir l'écoulement en amont de l'élément constitutif.

En outre, dans ce premier mode de réalisation, lorsque le filet est agencé en amont de l'élément constitutif, l'écoulement arrivant sur l'élément constitutif est freiné, et donc le bruit généré est moindre. De plus, la forme vue par l'écoulement est plus aérodynamique et donc le bruit généré est plus faible.

Par ailleurs, dans un second mode de réalisation, ledit filet entoure (de préférence complètement) au moins un élément constitutif. Dans ce cas, de préférence, ledit filet entoure toutefois tout un groupe d'éléments constitutifs (tubes, bras, moyens d'attache, roues, ...).

Ce second mode de réalisation est donc particulièrement bien adapté à la réduction du bruit engendré par un groupe d'éléments constitutifs du train d'atterrissage. Dans ce cas, ledit filet qui peut présenter notamment une forme prismatique, cylindrique ou elliptique est réalisé de préférence en un matériau métallique (acier aluminium), ce qui permet au filet de résister à l'écoulement et de garder sa forme initiale. Il peut également être réalisé en un matériau élastique (fibres de polyester).

Dans ce second mode de réalisation, le filet, qui entoure un groupe d'éléments constitutifs, permet de réduire les turbulences produites par des éléments situés en amont ou par certains des éléments entourés par ce filet. De plus, ledit filet présente une forme plus aérodynamique que le groupe d'éléments constitutifs en tant que tel de sorte que l'écoulement d'air qui atteint le filet engendre moins de bruit. En outre, dans le volume interne formé par ce filet, la vitesse de l'air qui arrive sur l'élément constitutif est fortement réduite en raison de frictions visqueuses lors du passage de l'air à travers- les-mailles géométriques, ce qui contribue également à réduire-le bruit.

Par ailleurs, dans un mode de réalisation particulier :
- lesdites mailles géométriques (polygonales ou rondes) du filet présentent des dimensions (par exemple le diamètre pour des mailles rondes, la longueur d'un côté pour des malles carrées, ...) comprises entre 0,2 et 12,5 mm, et de préférence entre 1,5 et 2 mm ; et/ou
- ledit train d'atterrissage comporte une pluralité de moyens de réduction de bruit conformes à l'invention, tels que décrits précédemment.

Les figures du dessin annexé feront bien comprendre comment l'invention peut être réalisée. Sur ces figures, des références identiques désignent des éléments semblables.

Les figures 1 à 4 montrent schématiquement différentes variantes relatives à un premier mode de réalisation d'un moyen de réduction de bruit conforme à l'invention.

Les figures 5 à 7 représentent un exemple de réalisation d'un moyen de réduction de bruit, correspondant à la variante de la figure 1.

La figure 8 montre partiellement un train d'atterrissage d'avion, qui est muni d'un moyen de réduction de bruit conforme à un second mode de réalisation de l'invention.

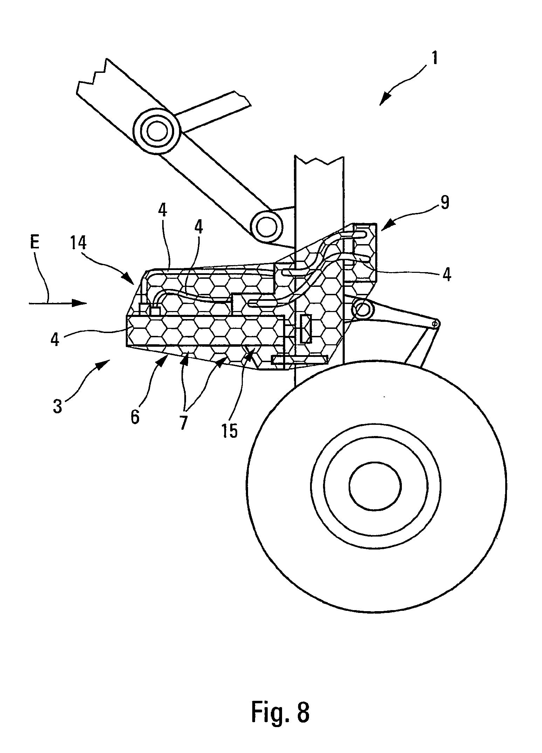

La présente invention concerne un train d'atterrissage 1 d'avion, par exemple un train d'atterrissage avant ou un train d'atterrissage principal, tel que représenté à titre d'exemple sur la figure 8.

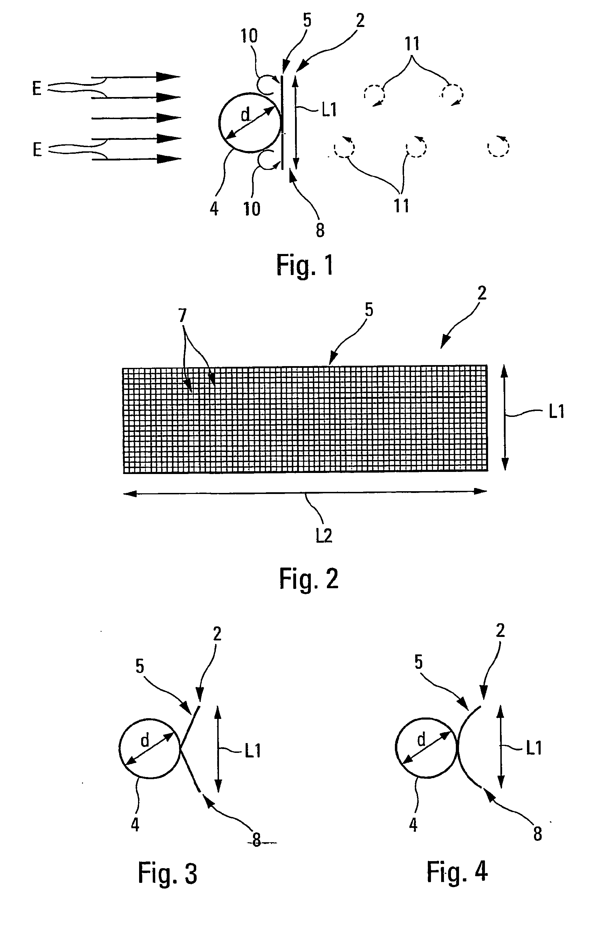

Ce train d'atterrissage 1 qui est susceptible d'être amené de façon usuelle dans l'une de deux positions, à savoir une position rentrée (non représentée) en vol et une position déployée (figure 8) à l'atterrissage, au décollage, ou lors d'un roulement au sol, comporte au moins un moyen de réduction de bruit 2, 3 qui est associé à au moins un élément constitutif 4 (tube, bras, moyen d'attache, tuyau, ...) du train d'atterrissage 1. Ledit moyen de réduction de bruit 2, 3 est représenté selon un premier mode de réalisation 2 sur les figures 1 à 7 et selon un second mode de réalisation 3 sur la figure 8.

Selon l'invention, ledit moyen de réduction de bruit 2, 3 comprend au moins un filet individuel 5, 6 qui comprend des mailles géométriques 7 et qui est agencé au niveau d'au moins un élément constitutif 4 (non aérodynamique) du train d'atterrissage 1. Ce filet individuel 5, 6 est agencé de sorte qu'au moins l'une de ses parties 8, 9 est sensiblement orthogonale à l'écoulement de l'air, illustrée par des flèches E sur la figure 1, dans une position d'extrémité (en amont ou en aval) dudit élément constitutif 4, lorsque le train d'atterrissage 1 se trouve dans sa position déployée. Un tel filet individuel 5, 6 permet de réduire le bruit engendré par les effets de l'écoulement de l'air au niveau dudit élément constitutif 4, comme précisé ci-dessous.

De préférence, ledit filet 5 est agencé au niveau dudit élément constitutif 4 de sorte qu'au moins l'une de ses parties 8 est sensiblement orthogonale à l'écoulement E de l'air, en aval dudit élément constitutif 4, lorsque le train d'atterrissage se trouve dans sa position déployée, comme représenté sur la figure 1 Ceci permet de réduire des turbulences génératrices de bruit (illustrées par des flèches courbes 10) qui sont créées en aval dudit élément constitutif 4 par une perturbation de l'écoulement de l'air, engendrée par cet élément constitutif 4. Cette réduction des turbulences est illustrée par des flèches courbes 11 en traits interrompus qui remplacent les flèches courbes 10 en traits pleins (illustrant les turbulences). De plus, l'élément en aval permet de détourner une partie de l'écoulement de l'élément constitutif 4.

Ainsi, grâce à l'invention, ledit moyen de réduction de bruit 2, 3 qui comprend un filet individuel 5, 6 présente de nombreux avantages. En particulier:
- il permet de réduire efficacement le bruit, comme précisé ci-dessous ;
- il est léger par nature ;
- il est peu encombrant ;
- il est facile à monter ;
- il n'affecte pas le- fonctionnement des différents éléments constitutifs du train d'atterrissage 1 ; et
- il peut être appliqué à tout type de train d'atterrissage 1.

Dans un premier mode de réalisation représenté sur les figures 1 à 7, ledit moyen de réduction de bruit 2 comporte un filet 5 qui présente une forme en plaque et qui est agencé, de préférence, en aval d'un seul élément constitutif 4 non aérodynamique qui est représenté à titre d'exemple sous forme d'un cylindre sur les figures 1, 3, 4 et 7. Ce premier mode de réalisation est particulièrement bien approprié à la réduction du bruit engendré par un seul élément constitutif individuel 4.

Le filet 5 peut présenter, selon les variantes de réalisation, notamment :
- une forme plane, comme représenté sur les figures 1, 2, 5, 6 et 7 ;
- une forme en V, comme représenté sur la figure 3 ; et
- une forme courbe, comme représenté sur la figure 4.

Le filet 5 est réalisé, de préférence, soit en un matériau rigide (par exemple métallique), soit en un matériau élastique. Les mailles géométriques 7 peuvent être réalisées en une seule pièce à partir d'un matériau élastique ou à partir de fins fils (de préférence métalliques). De plus, lesdites mailles géométriques 7 présentent des dimensions (par exemple le diamètre pour des mailles rondes, la longueur d'un côté pour des mailles carrées, ...) comprises entre 0,2 et 12,5 mm et, de préférence, entre 1,5 et 2 mm. Les diamètres des fils sont compris, de préférence, entre 0,1 et 1,2 mm.

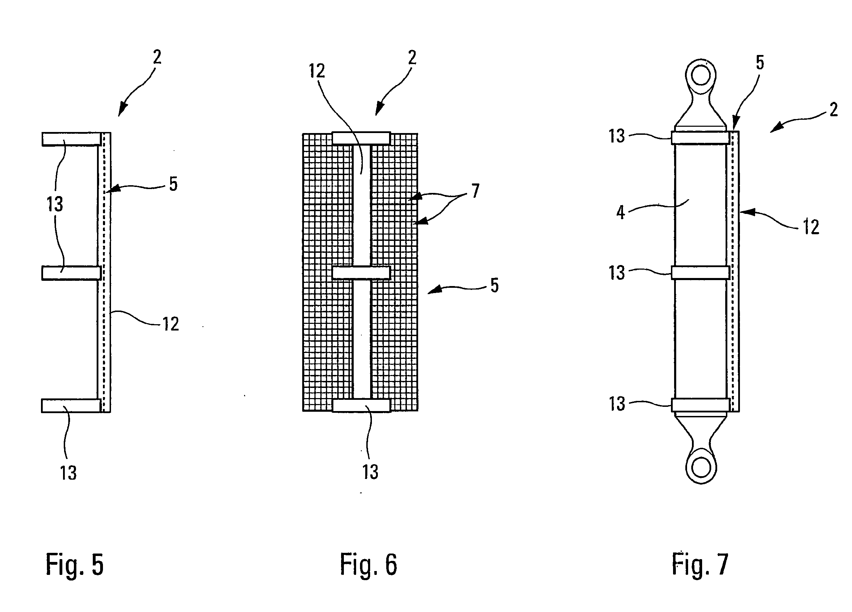

Ledit filet individuel 5 présente une largeur L1 transversalement à l'écoulement de l'air E (et à l'axe longitudinal de l'élément constitutif 4), qui est, de préférence, comprise entre 1,5 et 3 fois les dimensions transversales de l'élément constitutif 4, à savoir le diamètre d dans l'exemple des figures 1, 3 et 4. De plus, la longueur L2 dudit filet 5 est, de préférence, sensiblement égale à la longueur de l'élément constitutif 4, comme représenté par exemple sur la figure 7.

Dans le mode de réalisation particulier des figures 5 à 7, le moyen de réduction de bruit 2 comporte, en plus du filet 5, une barrette 12 qui est fixée, par exemple par collage, sur le filet 5 et qui est solidaire d'éléments de fixation 13, par exemple des collerettes. Ces collerettes 13 présentent un diamètre qui est adapté au diamètre du cylindre formant l'élément constitutif 4 et sont fixées, de façon usuelle, sur ce cylindre, comme représenté sur la figure 7, de manière à maintenir le filet 5 dans la position adéquate par rapport audit élément constitutif 4.

Dans ce premier mode de réalisation, lorsque le filet 5 est agencé en aval de l'élément constitutif 4, les turbulences génératrices de bruit, qui se détachent de l'élément constitutif 4, perdent l'essentiel de leur énergie lorsqu'ils traversent les mailles 7 dudit filet 5 agencé en aval, comme illustré sur la figure 1. Ainsi, ces turbulences sont pratiquement annulées, et n'engendrent donc presque pas de bruit.

Par ailleurs, dans le second mode de réalisation représenté sur la figure 8, le filet 6 entoure tout un groupe 14 d'éléments constitutifs 4 (tubes, bras, moyens d'attache, tuyaux, ...).

Ce filet 6 peut présenter notamment une forme prismatique, cylindrique ou elliptique et est réalisé, de préférence, en un matériau métallique (acier aluminium), ce qui permet au filet de résister à l'écoulement et de garder sa forme initiale. Il peut également être réalisé en un matériau élastique (fibres de polyester). De préférence, les mailles géométriques 7 dudit filet 6 présentent des dimensions (par exemple le- diamètre pour des mailles rondes, la longueur d'un côté pour des mailles carrées, ...) comprises entre 0,2 et 12,5 mm et, de préférence, entre 1,5 et 2 mm. Les diamètres des fils sont compris, de préférence, entre 0,1 et 1,2 mm.

Dans ce second mode de réalisation, le filet 6 qui entoure un groupe 14 d'éléments constitutifs 4, permet de réduire les turbulences produites par des éléments situés en amont (dans le sens d'écoulement E de l'air) ou par certains des éléments 4 entourés par ce filet 6. De plus, ledit filet 6 présente une forme plus aérodynamique que le groupe 14 d'éléments constitutifs 4 en tant que tel de sorte que l'écoulement d'air qui atteint ledit filet 6 engendre moins de bruit (que celui qui atteindrait le groupe 14 en l'absence de filet 6).

En outre, dans le volume interne 15 formé par ce filet 6, la vitesse de l'air est fortement réduite en raison de frictions visqueuses lors du passage de l'air à travers les mailles géométriques 7. Le bruit (proportionnel à la vitesse puissance 6) est donc plus faible.

Le train d'atterrissage 1 conforme à l'invention peut comporter, dans un mode de réalisation particulier, une pluralité de tels moyens de réduction de bruit 2, 3.

## Revendications

1. Train d'atterrissage d'avion, qui est susceptible d'être amené dans l'une de deux positions, à savoir une position rentrée et une position déployée, et qui comporte au moins un moyen de réduction de bruit (2, 3) qui est associé à au moins un élément constitutif (4) dudit train d'atterrissage (1),
**caractérisé en ce que** ledit moyen de réduction du bruit (2, 3) comprend au moins un filet individuel (5, 6) qui comprend des mailles géométriques (7) et qui est agencé au niveau dudit élément constitutif (4) de sorte qu'au moins l'une de ses parties (8, 9) est sensiblement orthogonale à l'écoulement de l'air (E) dans une position d'extrémité dudit élément constitutif (4), lorsque le train d'atterrissage (1) se trouve dans sa position déployée, de manière à engendrer une réduction du bruit engendré par les effets de l'écoulement de l'air (E) au niveau dudit élément constitutif (4).

2. Train d'atterrissage selon la revendication 1,
**caractérisé en ce que** ledit filet (5, 6) est agencé au niveau dudit élément constitutif (4) de sorte qu'au moins l'une de ses parties est sensiblement orthogonale à l'écoulement de l'air (E) en aval dudit élément constitutif (4), lorsque le train d'atterrissage (1) se trouve dans sa position déployée, de manière à au moins réduire des turbulences génératrices de bruit qui sont créées en aval dudit élément constitutif (4) par une perturbation de l'écoulement de l'air engendré par cet élément constitutif (4).

3. Train d'atterrissage selon l'une des revendications 1 et 2,
**caractérisé en ce que** ledit filet (5) présente une forme en plaque, et **en ce qu'**il est agencé dans une position d'extrémité relative à un seul élément constitutif (4).

4. Train d'atterrissage selon la revendication 3,
**caractérisé en ce que** ledit filet (5) présente une largeur (L1) qui est comprise entre 1,5 et 3 fois la dimension transversale (d) de l'élément constitutif (4).

5. Train d'atterrissage selon l'une des revendications 1 et 2,
**caractérisé en ce que** ledit filet (6) entoure au moins un élément constitutif (4).

6. Train d'atterrissage selon la revendication 5,
**caractérisé en ce que** ledit filet (6) entoure un groupe (14) d'éléments constitutifs (4).

7. Train d'atterrissage selon l'une des revendications 5 et 6, **caractérisé en ce que** ledit filet (6) est réalisé en un matériau métallique.

8. Train d'atterrissage selon l'une quelconque des revendications précédentes,
**caractérisé en ce que** lesdites mailles géométriques (7) du filet (5, 6) présentent des dimensions comprises entre 0,2 et 12,5 mm.

9. Train d'atterrissage selon l'une quelconque des revendications précédentes,
**caractérisé en ce qu'**il comporte une pluralité de moyens de réduction de bruit (2, 3).

10. Avion,
**caractérisé en ce qu'**il comporte un train d'atterrissage (1) tel que celui spécifié sous l'une quelconque des revendications 1 à 9.

## Claims

1. Aircraft landing gear which can be brought into one of two positions, namely an up position and a down position, and which comprises at least one noise reducing means (2, 3) which is associated with at least one constituent element (4) of said landing gear (1), **characterized in that** said noise reducing means (2, 3) comprises at least one individual net (5, 6) which comprises geometric meshes (7) and which is positioned at said constituent element (4) such that at least one of the parts (8, 9) thereof is substantially orthogonal to the airflow (E) in an end position of said constituent element (4) when the landing gear (1) is in its down position, so as to reduce the noise generated by the effects of the airflow (E) at said constituent element (4).

2. The landing gear as claimed in claim 1, **characterized in that** said net (5, 6) is positioned at said constituent element (4) such that at least one of the parts thereof is substantially orthogonal to the airflow (E) downstream of said constituent element (4) when the landing gear (1) is in its down position, so as to at least reduce the noise-generating turbulence that is created downstream of said constituent element (4) by a disruption of the airflow caused by this constituent element (4).

3. The landing gear as claimed in one of claims 1 and 2,
**characterized in that** said net (5) is in sheet form, and **in that** it is positioned in an end position relative to a single constituent element (4).

4. The landing gear as claimed in claim 3, **characterized in that** said net (5) has a width (L1) that ranges between 1.5 and 3 times the transverse dimension (d) of the constituent element (4).

5. The landing gear as claimed in one of claims 1 and 2,
**characterized in that** said net (6) surrounds at least one constituent element (4).

6. The landing gear as claimed in claim 5, **characterized in that** said net (6) surrounds a group (14) of constituent element (4).

7. The landing gear as claimed in one of claims 5 and 6,
**characterized in that** said net (6) is made of a metallic material.

8. The landing gear as claimed in any one of the preceding claims,
**characterized in that** said geometric meshes (7) of the net (5, 6) have dimensions ranging between 0.2 and 12.5 mm.

9. The landing gear as claimed in any one of the preceding claims,
**characterized in that** it comprises a plurality of noise reducing means (2, 3).

10. An aircraft,
**characterized in that** it comprises landing gear (1) as specified in any one of claims 1 to 9.

## Patentansprüche

1. Flugzeugfahrwerk, das imstande ist, in eine von zwei Stellungen gebracht zu werden, nämlich eine eingefahrene Stellung und eine ausgefahrene Stellung, und das zumindest eine Geräuschminderungsvorrichtung (2, 3) umfasst, die zumindest einem Bestandteil (4) des besagten Flugzeugfahrwerks (1) zugeordnet ist,
**dadurch gekennzeichnet, dass** die besagte Geräuschminderungsvorrichtung (2, 3) zumindest ein einzelnes Netz (5, 6) umfasst, das geometrische Maschen (7) umfasst, und das im Bereich des besagten Bestandteils (4) angeordnet ist, sodass zumindest einer seiner Abschnitte (8, 9) in einer Endstellung des besagten Bestandteils (4) in etwa senkrecht zur Luftströmung (E) steht, wenn sich das Fahrwerk (1) in seiner ausgefahrenen Stellung befindet, sodass eine Minderung jenes Geräusches erzielt wird, das durch die Luftströmung (E) im Bereich des besagten Bestandteils (4) entsteht.

2. Fahrwerk nach Anspruch 1,
**dadurch gekennzeichnet, dass** das besagte Netz (5, 6) im Bereich des besagten Bestandteils (4) angeordnet ist, sodass zumindest einer seiner Abschnitte in etwa senkrecht zur Luftströmung (E) hinter dem besagten Bestandteil (4) steht, wenn sich das Fahrwerk (1) in seiner ausgefahrenen Stellung befindet, um zumindest geräuscherzeugende Turbulenzen zu verringern, die hinter dem besagten Bestandteil (4) durch eine Störung der durch dieses Bestandteil (4) erzeugten Luftströmung entstehen.

3. Fahrwerk nach einem der Ansprüche 1 und 2,
**dadurch gekennzeichnet, dass** das besagte Netz (5) eine Plattenform aufweist, und dadurch, dass es in einer Endlage in Bezug auf ein einziges Bestandteil (4) angeordnet ist.

4. Fahrwerk nach Anspruch 3,
**dadurch gekennzeichnet, dass** das besagte Netz (5) eine Breite (L1) aufweist, die 1,5 bis 3 Mal so groß ist, wie das Quermaß (d) des Bestandteils (4).

5. Fahrwerk nach einem der Ansprüche 1 und 2,
**dadurch gekennzeichnet, dass** das besagte Netz (6) zumindest ein Bestandteil (4) umgibt.

6. Fahrwerk nach Anspruch 5,
**dadurch gekennzeichnet, dass** das besagte Netz (6) eine Gruppe (14) an Bestandteilen (4) umgibt.

7. Fahrwerk nach einem der Ansprüche 5 und 6,
**dadurch gekennzeichnet, dass** das besagte Netz (6) aus einem metallischen Werkstoff gefertigt ist.

8. Fahrwerk nach irgendeinem der vorherigen Ansprüche,
**dadurch gekennzeichnet, dass** die besagten geometrischen Maschen (7) des Netzes (5, 6) Abmessungen aufweisen, die zwischen 0,2 und 12,5 mm liegen.

9. Fahrwerk nach irgendeinem der vorherigen Ansprüche,
**dadurch gekennzeichnet, dass** es eine Vielzahl an Geräuschminderungsvorrichtungen (2, 3) umfasst.

10. Flugzeug,
**dadurch gekennzeichnet, dass** es ein Fahrwerk (1) umfasst, wie es in irgendeinem der Ansprüche 1 bis 9 bezeichnet ist.
